# EUROPEAN PATENT SPECIFICATION

(11) **EP 1 479 533 B1**
(45) Date of publication and mention of the grant of the patent: **09.05.2012**
(21) Application number: 04011747.5
(22) Date of filing: 18.05.2004
(51) Int. Cl.: B60B 5/02

(54) **Wheel with plastic rim and integral sensor**
Rad mit Kunststofffelge und integriertem Sensor
Roue avec jante en plastique et capteur intégral

(30) Priority: 30.05.2003 US 474564 P; 21.05.2003 US 472482 P
(43) Date of publication of application: 24.11.2004
(73) Proprietor: Continental Automotive Systems US, Inc., Auburn Hills, MI 48326 (US)
(72) Inventor: Daly, Paul Desmond, Troy MI 48084 (US); Losey, Allan, Ortonville MI 48462 (US); Lewis, Marcus E., Southfiled MI 48075 (US)
(74) Representative: Fischer, Michael

(56) References cited:
- EP-A- 0 503 296
- WO-A-02/083436
- US-A- 4 235 185
- US-A- 5 282 673
- US-A1- 2002 188 392

## Description

### BACKGROUND OF THE INVENTION

This invention relates to a unique vehicle wheel, wherein a sensor is attached within the wheel and the rim is formed of a non-metallic material.

Vehicle wheels typically include an outer rubber tire secured to a rim. The rims have historically been formed of metal. Normally, the tire may be removed from the metal rim for replacement, as necessary.

Recently, plastics and composite materials have advanced to the point where they are sufficiently strong such that they could be utilized as wheel rims. However, there has not been sufficient motivation to drive this change. In order to reduce weight, US 5,282,673 proposes a compound resin wheel.

Also, recently, tire pressure sensors have become required in the industry. Tire pressure sensors have typically been mounted in the prior art wheel at various locations. One common location incorporates the sensor adjacent to the air valve. Also, an antenna for transmitting signals from the sensor to a controller on the vehicle has been incorporated into the air valve. This has required the air valve to be formed of materials other than the standard rubber that has been previously utilized. It would be desirable to allow the use of standard air valves.

Another concern with the prior art tire pressure sensors is that the metal rims have made the transmission of signals from the sensor difficult. The signals have sometimes been difficult to send, due to the shielding of the signal that can occur from the metal rim. It would be desirable in many applications to send the sensor information via a wireless RF, LF or other such radio signal.

EP 0 503 296 proposes that in a device for monitoring the air pressure inside a pneumatic tyre, supported by the rim of a vehicle wheel, using a pressure or measurement value signal generator which can be acted on by the tyre pressure and in whose circumferential area a measurement value sensor or similar signal sensor which is fixed to the vehicle in a stationary fashion is arranged, the pressure signal generator is arranged near to the axis of the wheel and connected to the inside of the tyre by means of at least one air passage running on or in the rim. In addition, the pressure signal generator is to be connected to the inside of the tyre by means of a line which leads to it directly from the rim base, and said line is to be made, if appropriate, of flexible material or the air passage is to be at least one channel formed into the rim. However, this solution involves several elements outside of the tire to be under pressure and an air passage on or in the rim, which is involves an increased risk of leakage as well as more complex manufacturing and maintenance. It is therefore the objective of the present invention to provide a wheel that can be constructed in a more simple way and with a reduced risk of leakage and that still allows to transmit a measured value for a tire pressure. This problem is solved by the measures taken in accordance with the independent claim.

### SUMMARY OF THE INVENTION

In a disclosed embodiment of this invention, a vehicle wheel is manufactured utilizing a non-metallic rim. While plastic is preferred, other non-metallic materials, such as composites, may be utilized. A tire could be permanently attached to the plastic rim such that the rim will not allow replacement of the tire. A sensor and antenna are incorporated into the tire and rim, and record information about the operation of the vehicle wheel. Most preferably, the sensor is incorporated into a portion of the rim. The rim preferably is molded from two pieces of plastic, with an end disc and an internal rim part, fitting within the end disc. The sensor is preferably snapped into a mounting bracket molded to one of the two pieces that form the rim.

The disc initially receives one bead of the tire, and the internal rim part is then inserted into the disc. At that point, the other bead on the tire seats on the internal rim part. Both beads are then welded to the rim parts.

Preferably, a port is used to allow air pressure to reach the sensor from within a sealed volume in the tire. In this manner, the sensor receives pressure information, and can transmit and store this information. Moreover, the sensor is preferably provided with a speed sensor (which could be an accelerometer) and an antenna. The sensor is thus able to store not only information with regard to the tire pressure, but also information with regard to the speed of the tire, the hours of operation, etc. The sensor may be provided with a memory such that it stores an effective life history of the wheel. The sensor is also able to transmit signals to a control on the vehicle through a wireless connection. The sensor may be provided with its own battery, or may receive a charging signal as is known in the art to charge itself for transmission of the wireless signal.

These and other features of the present invention can be best understood from the following specification and drawings, the following of which is a brief description.

### BRIEF DESCRIPTION OF THE DRAWINGS

Figure 1 is a cross-sectional view of a vehicle wheel incorporating the present invention.

Figure 2 is an enlarged portion of the vehicle wheel along line 2-2 as shown in Figure 1.

Figure 3 is an exploded view of an inventive sensor mount.

Figure 4 is an assembly view of the inventive wheel.

### DETAILED DESCRIPTION OF THE PREFERRED EMBODIMENT

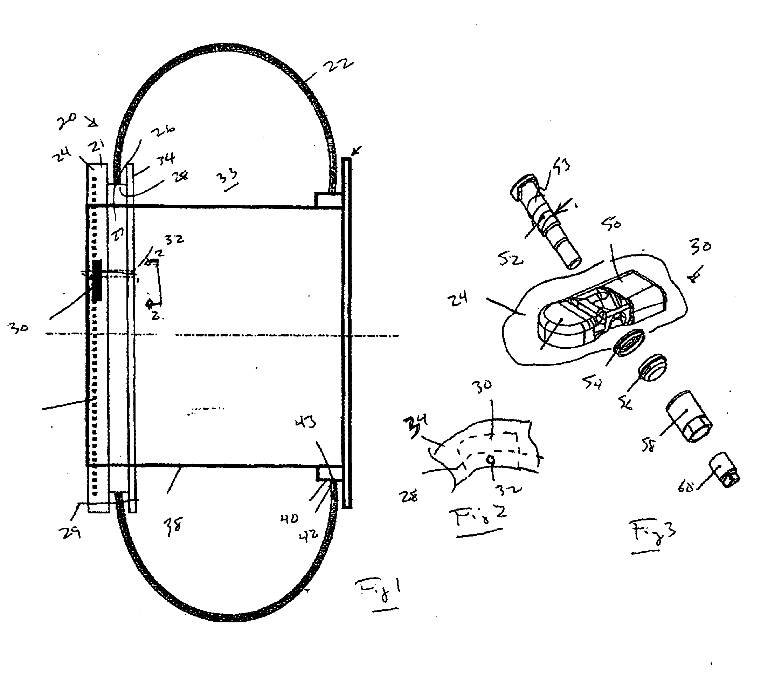

Figure 1 shows a vehicle wheel 20 incorporating a tire 22. As is known, tire 22 has beads 26 and 42, which seal on a rim 21. The rim 21 includes an end disc 24 that receives bead 26 on a surface 28. An inner face 34 of disc 24 is positioned inwardly of the bead 26. A weld joint 27 secures the bead 26 to the surface 28. As shown schematically, an air valve 29 allows air to be inserted through the disc 24 and into an internal cavity 33 within the tire 22.

A sensor 30 is preferably mounted in the disc 24. A hole 32 communicates with the cavity 33, and supplies air pressure information to the sensor 30. Sensor 30 may be as known in the art, and is capable of reading the air pressure within the cavity 33, and storing information with regard to the pressure. Further, the sensor 30 is preferably provided with a speed sensor for sensing the speed of movement or rotation of the wheel 20. Sensor 30 is also preferably provided with the ability to transmit signals to the control on a vehicle. This transmission may be battery powered, or may be powered through an LF coupling, as is known. The disc 24 mates with an internal rim part 38 to form rim 21. Both disc 24 and internal rim part 38 are formed from a suitable non-metallic material, such as high strength plastic. As shown, a surface 40 receives the bead 42 from the tire 22. Again, a weld joint 43 secures the bead 42 to the surface 40.

As shown in Figure 2, as can be appreciated, the sensor 30 is mounted within the disc 24. The hole 32 extends through the disc 24 to communicate air pressure to the sensor 30.

Figure 3 is an exploded view of the sensor 30. As shown, a housing 50 receives the sensor body 52, and an antenna 53, shown schematically. The sensor body 52 and its communication with its antenna 53 may be as known in the art. Housing 50 is preferably molded into a portion of the disc 24. The sensor body 52 receives a plate 54, a seal 56, a nut 58, and a cap 60. The structure and operation of the sensor may again be as known in the art. Its location and incorporation into the rim, however, is inventive.

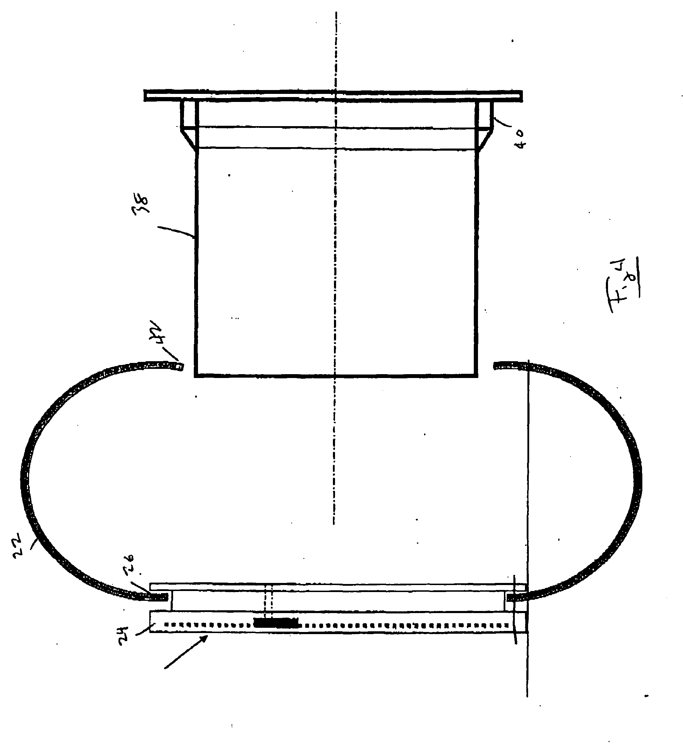

Figure 4 shows another feature and in particular the assembly steps of the inventive vehicle wheel 20. As shown, the disc 24 initially receives the bead 26 from the tire 22. The internal rim part 38 is then moved into the inner periphery of the disc 24. The two rim parts may then be welded together, and the two beads 26 and 42 are welded to their respective surfaces, as is shown in Figure 1. Preferably, laser welding may be used.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A vehicle wheel (20) comprising:
a rim (21) formed from a non-metallic material;
a tire (22) having a pair of beads (26, 42) secured to said rim (21), and defining an enclosed chamber between said beads (26, 42) and said rim (21); and
a sensor (30) for sensing a pressure in said enclosed chamber, said sensor (30) communicating with air in said enclosed chamber, and said sensor (30) being capable of transmitting a pressure signal outwardly of said vehicle wheel (20); and
wherein said sensor (30) is mounted within a housing (50) molded to a portion of said rim (21).

2. The vehicle wheel (20) as set forth in claim 1, wherein said rim (21) is formed of two pieces, with a disc (24) receiving one bead (26, 42) of said tire and a second internal rim part secured to said disc (24) and secured to a second bead (26, 42) of said tire (22).

3. The vehicle wheel (20) as set forth in claim 2, wherein said sensor (30) is mounted within said disc (24).

4. The vehicle wheel (20) as set forth in claim 3, wherein said sensor (30) receives an antenna (53).

5. The vehicle wheel (20) as set forth in claim 4, wherein said sensor (30) is capable of transmitting pressure information as an LF signal.

6. The vehicle wheel (20) as set forth in claim 4, wherein said sensor (30) is capable of transmitting pressure information as an RF signal.

7. The vehicle wheel (20) as set forth in claim 2, wherein said sensor (30) includes a speed sensor, said sensor (30) recording information with regard to time of operation of said vehicle wheel (20), and speed of operation of said vehicle wheel (20).

8. The vehicle wheel (20) as set forth in claim 7, wherein said sensor (30) stores identification about which wheel (20) is in service and the location on the vehicle.

9. The vehicle wheel (20) as set forth in claim 2, wherein an air pressure hole (32) extends through said (24) disc to communicate air from said enclosed chamber to said sensor (30).

10. The vehicle wheel (20) as set forth in claim 1, wherein said tire (22) is not removable from said rim (21).

11. The vehicle wheel (20) as set forth in claim 1, wherein said rim (21) is formed of a plastic.

12. The vehicle wheel (20) as set forth in claim 1, wherein said sensor (30) stores a life history of the vehicle wheel.

## Patentansprüche

1. Fahrzeugrad (20), das Folgendes umfasst:
eine Felge (21) aus einem nichtmetallischen Material,
einen Reifen (22) mit zwei an der Felge (21) befestigten Wulsten (26, 42), der eine abgeschlossene Kammer zwischen den Wulsten (26, 42) und der Felge (21) definiert, und
einen Sensor (30) zum Erfassen eines Drucks in der abgeschlossenen Kammer, wobei der Sensor (30) mit Luft in der abgeschlossenen Kammer in Verbindung steht und in der Lage ist, ein Drucksignal aus dem Fahrzeugrad (20) heraus zu übertragen, und
wobei der Sensor (30) in einem Gehäuse (50) angebracht ist, das an einen Abschnitt der Felge (21) angeformt ist.

2. Fahrzeugrad (20) nach Anspruch 1, bei dem die Felge (21) aus zwei Teilen besteht, wobei eine Scheibe (24) einen Wulst (26, 42) des Reifens aufnimmt und ein innerer zweiter Felgenteil an der Scheibe (24) und an einem zweiten Wulst (26, 42) des Reifens (22) befestigt ist.

3. Fahrzeugrad (20) nach Anspruch 2, bei dem der Sensor (30) in der Scheibe (24) angebracht ist.

4. Fahrzeugrad (20) nach Anspruch 3, bei dem der Sensor (30) eine Antenne (53) aufnimmt.

5. Fahrzeugrad (20) nach Anspruch 4, bei dem der Sensor (30) Druckinformationen als Niederfrequenzsignal übermitteln kann.

6. Fahrzeugrad (20) nach Anspruch 4, bei dem der Sensor (30) Druckinformationen als Hochfrequenzsignal übermitteln kann.

7. Fahrzeugrad (20) nach Anspruch 2, bei dem der Sensor (30) einen Geschwindigkeitssensor umfasst, wobei der Sensor (30) Informationen bezüglich der Betriebsdauer und der Betriebsgeschwindigkeit des Fahrzeugrades (20) aufzeichnet.

8. Fahrzeugrad (20) nach Anspruch 7, bei dem der Sensor (30) Angaben darüber speichert, welches Rad (20) benutzt wird und an welcher Stelle am Fahrzeug es sich befindet.

9. Fahrzeugrad (20) nach Anspruch 2, bei dem ein Luftdruckloch (32) durch die Scheibe (24) hindurch verläuft und die Luft aus der abgeschlossenen Kammer mit dem Sensor (30) verbindet.

10. Fahrzeugrad (20) nach Anspruch 1, bei dem sich der Reifen (22) nicht von der Felge (21) abnehmen lässt.

11. Fahrzeugrad (20) nach Anspruch 1, bei dem die Felge (21) aus einem Kunststoff besteht.

12. Fahrzeugrad (20) nach Anspruch 1, bei dem der Sensor (30) einen Lebenszyklus des Fahrzeugrades speichert.

## Revendications

1. Roue ( 20 ) de véhicule comprenant :
une jante ( 21 ) en un matériau non métallique ;
un pneumatique ( 22 ) ayant une paire de talons (26, 42 ) fixés à la jante ( 21 ) et définissant une chambre fermée entre les talons ( 26, 42 ) et la jante ( 21 ) ; et
un capteur (30) pour détecter une pression dans la chambre fermée, le capteur ( 30 ) communiquant avec de l'air dans la chambre fermée et le capteur ( 30 ) étant apte à transmettre un signal de pression à l'extérieur de la roue ( 20 ) du véhicule ; et
dans laquelle le capteur ( 30 ) est monté dans un boîtier ( 50 ) moulé sur une partie de la jante ( 21 ).

2. Roue ( 20 ) de véhicule comme exposé dans la revendication 1, dans laquelle la jante ( 21 ) est formée de deux pièces, en ayant un disque (24) recevant l'un des talons ( 26, 42 ) du pneumatique et une deuxième partie interne de jante fixée au disque ( 25 ) et fixée à un deuxième talon ( 26, 42 ) du pneumatique ( 22 ).

3. Roue ( 20 ) de véhicule comme exposé dans la revendication 2, dans laquelle le capteur ( 31 ) est monté dans le disque ( 24 ).

4. Roue (20) de véhicule comme exposé dans la revendication 3, dans laquelle le capteur ( 30 ) reçoit une antenne ( 53 ).

5. Roue ( 20 ) de véhicule comme exposé dans la revendication 4, dans laquelle le capteur ( 30 ) est apte à transmettre une information de pression sous la forme d'un signal LF de basse fréquence.

6. Roue (20) de véhicule comme exposé dans la revendication 4, dans laquelle le capteur ( 30 ) est apte à transmettre une information de pression sous la forme d'un signe RF de basse fréquence.

7. Roue (20) de véhicule comme exposé dans la revendication 2, dans laquelle le capteur ( 30 ) comprend un capteur de vitesse, le capteur (30) enregistrant de l'information concernant la durée de fonctionnement de la roue ( 20 ) du véhicule et la vitesse de fonctionnement de la roue ( 20 ) du véhicule.

8. Roue ( 20 ) de véhicule comme exposé dans la revendication 7, dans laquelle le capteur ( 30 ) mémorise de l'identification sur la roue ( 20 ) qui est en service et sur son emplacement sur le véhicule.

9. Roue ( 20 ) de véhicule comme exposé dans la revendication 2, dans laquelle un trou ( 32 ) de pression d'air passe à travers le disque ( 24 ) pour mettre de l'air de la chambre fermée en communication avec le capteur ( 30 ).

10. Roue ( 20 ) de véhicule comme exposé dans la revendication 1, dans laquelle le pneumatique ( 22 ) n'est pas amovible de la jante ( 21 ).

11. Roue ( 20 ) de véhicule comme exposé dans la revendication 1, dans laquelle la jante ( 21 ) est en une matière plastique.

12. Roue ( 20 ) de véhicule comme exposé dans la revendication 1, dans laquelle le capteur ( 30 ) mémorise un historique de la roue du véhicule.
